# EUROPEAN PATENT SPECIFICATION

(11) **EP 3 408 529 B1**
(45) Date of publication and mention of the grant of the patent: **04.03.2020**
(21) Application number: 16703168.1
(22) Date of filing: 29.01.2016
(51) Int. Cl.: F02M 53/04, F02M 25/022

(54) **WATER INJECTOR**
WASSERINJEKTOR
INJECTEUR D'EAU

(43) Date of publication of application: 05.12.2018
(73) Proprietor: Wärtsilä Finland Oy, 65100 Vaasa (FI)
(72) Inventor: ENLUND, Janne, 65100 Vaasa (FI); VUOHIJOKI, Antti, 65100 Vaasa (FI)
(74) Representative: Berggren Oy, Helsinki & Oulu
(86) International application number: PCT/FI2016/050055
(87) International publication number: WO 2017/129853

(56) References cited:
- EP-A1- 2 541 018
- DE-A1-102013 012 496
- GB-A- 353 781
- JP-A- H0 481 556
- US-A- 3 398 936

## Description

### Technical field of the invention

The present invention relates to a water injector for injecting water into a cylinder of a piston engine, as defined in the preamble of claim 1.

### Background of the invention

As the emission standards set more and more stringent requirements for the harmful nitrogen oxide (NOx), carbon monoxide (CO), volatile hydrocarbon (HC), particulate matter (PM) and other emissions of internal combustion engines, engine manufacturers have to find new ways to meet the requirements. At the same time, fuel efficiency of engines should be improved to reduce carbon dioxide (CO₂₎ emissions and ensure economical operation of engines. Documents EP 2 541 018 A and JP 0 408 1556 A disclose a water injector for injecting water into the cylinder of an engine.

In general, NOx emissions can be reduced by reducing the temperature in the combustion chamber. One way to do this is to apply water injection. Water can be injected directly into the combustion chamber or into the intake manifold to lower the temperature in the combustion chamber and thus reduce NOx emissions. The advantage of direct water injection into the cylinders is that a smaller amount of water is needed in comparison to water injection into the intake manifold. On the other hand, the direct water injection has a drawback that the water injector needs to be placed in the harsh conditions of the cylinder. The water injection is usually used only in certain operating conditions. When the water injection is in use, the water that flows through the water injectors works as a cooling medium and reduces the temperature of the water injectors. When the water injection is not in use, this cooling effect is not available and the temperature of the water injectors easily rises to a level causing hot corrosion. On the other hand, when the water injection is in use, water flowing through the water injectors can lower the temperature of the water injectors even too much, which makes the water injectors subject to cold corrosion. Cold corrosion refers to a phenomenon, where sulfuric acid condensates on a surface and deteriorates it. The water injectors may thus be subject to both hot and cold corrosion.

### Summary of the invention

The object of the present invention is to provide an improved water injector for injecting water into a cylinder of a piston engine. The characterizing features of the water injector according to the invention are given in the characterizing part of claim 1.

The water injector according to the invention comprises at least one nozzle hole through which water can be injected into the cylinder, a water inlet for receiving the water to be injected, a water channel connecting the water inlet to the nozzle hole, and an injector needle for opening and closing fluid communication between the water inlet and the nozzle hole. The water injector further comprises a cooling water space for receiving a cooling water flow.

The cooling water space helps regulating the temperature of the water injector and thus increases the lifetime of the water injector.

According to the invention, a flow path is arranged between the water channel and the cooling water space for allowing water flow from the water channel into the cooling water space. The water for regulating the temperature of the water injector can thus be taken directly from the water injector, and no additional external ducts are needed for introducing the water into the cooling water space.

According to an embodiment of the invention, the flow path is configured to convey at least 30 percent of the water that is introduced into the water channel into the cooling water space. This ensures that sufficient temperature regulating effect is achieved.

According to another embodiment of the invention, the flow path is configured to cause a pressure drop that is at least 70 percent of the pressure in the water channel as the water flows from the water channel into the cooling water space. When the flow path between the water channel and the cooling water space is configured to cause a pressure drop, the water temperature can be increased. When the water injection is in use, the water in the cooling water space can thus increase the surface temperature of the water injector and prevent cold corrosion.

According to an embodiment of the invention, the flow path between the water channel and the cooling water space comprises a portion with a limited cross-sectional flow area that is configured to cause a drop in the pressure of the water that flows from the water channel into the cooling water space.

According to the invention, the flow path comprises a groove, through which the water is arranged to flow from the water channel into the cooling water space and which is configured to reduce the pressure of the water. According to an embodiment of the invention, the groove is arranged in the injector needle. By arranging the groove in the injector needle, a water film is formed between the injector needle and the body of the water injector. This improves tribological properties of the water injector. According to an embodiment of the invention, the groove is helical. The pressure distribution around the injector needle is thus uniform and the injector needle is concentrated inside the bore in which it is arranged to move. By making the groove helical, different groove lengths can be provided by changing the pitch of the groove.

According to an embodiment of the invention, the width of the groove is at most 100 µm.

In an internal combustion engine according to the invention, each cylinder of the engine is provided with a water injector defined above.

### Brief description of the drawings

Embodiments of the invention are described below in more detail with reference to the accompanying drawings, in which
Fig. 1 shows schematically a water injection system of an internal combustion engine,
Fig. 2 shows a cross-sectional view of a water injector for a water injection system of an internal combustion engine and an actuator of the water injector,
Fig. 3 shows an enlarged cross-sectional view of the water injector of figure 2, and
Fig. 4 shows a cross-sectional view of the water injector of figure 3 from another direction.

### Description of embodiments of the invention

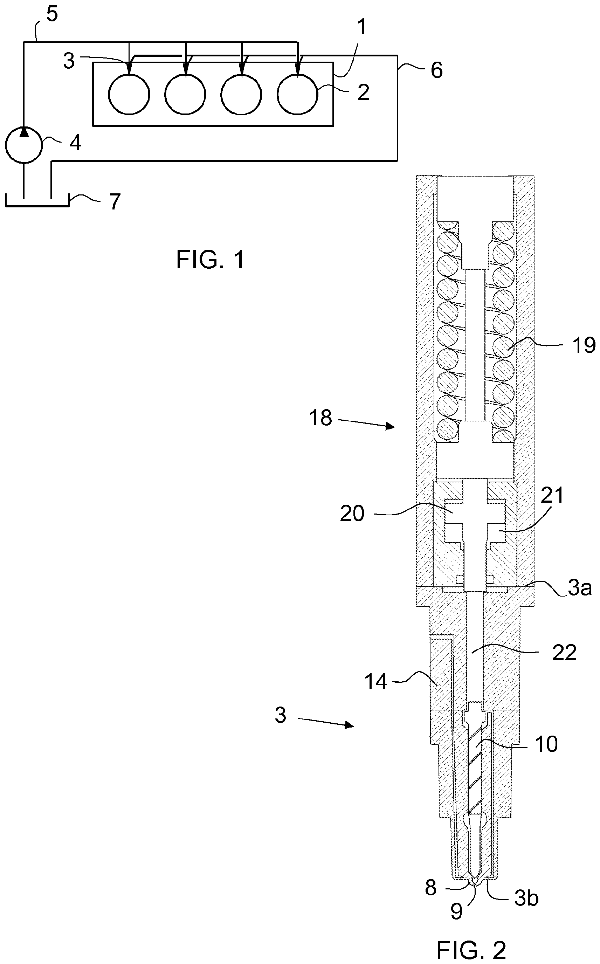

In figure 1 is shown a water injection system of an internal combustion engine 1. The engine 1 is a large piston engine, such as a main or an auxiliary engine of a ship or an engine that is used at a power plant for producing electricity. The engine 1 can be operated on liquid fuel, such as light fuel oil, marine diesel oil or heavy fuel oil, which is injected directly into the cylinders 2 of the engine 1. The fuel injection system can be based on a common rail principle or individual fuel injection pumps. Alternatively, the engine 1 can be a gas engine using gaseous fuel, possibly with liquid pilot fuel injection, or a multi-fuel engine that can be operated using different types of fuels. For the sake of clarity, the fuel injection system of the engine 1 is not shown in figure 1.

Figure 1 shows four cylinders 2, but the engine 1 can comprise any reasonable number of cylinders 2, which can be arranged, for instance, in line or in a V-configuration. The purpose of the water injection system is to enable water injection into the cylinders 2 of the engine 1 for lowering the peak temperatures in the cylinders 2 and decreasing NOₓ emissions of the engine 1. Each cylinder 2 of the engine 1 is provided with a water injector 3. The water injectors 3 are arranged to inject water directly into the cylinders 2. The water injectors 3 can be arranged for instance in the cylinder heads of the engine 1 in such a way that one end of each water injector 3 protrudes into a cylinder 2 and allows water injection into the combustion chamber. The water injection system comprises a pump 4, which pressurizes the water and supplies it from a water tank 7 via a water supply duct 5 to the water injectors 3. The water injection system could also comprise a high-pressure pump for pressurizing the water for water injection and a separate low-pressure pump for feeding the high-pressure pump. The water injection system could also comprise several low-pressure and/or high-pressure pumps.

The water injection preferably takes place during the compression stroke or during the combustion, but it is also possible to inject the water during the intake stroke. If the water is injected into the cylinders 2 during the compression stroke or during the combustion, the injection pressure needs to exceed the pressure prevailing in the cylinder 2 during the injection. Preferably the injection pressure is at least 100 bar.

Figure 2 shows a water injector 3 according to an embodiment of the invention together with an actuator 18. The water injector 3 has a first end 3a and a second end 3b. The first end 3a of the water injector 3 is an upper end, provided that the cylinders 2 of the engine 1 are arranged vertically. The second end 3b of the water injector 3 is a lower end, which protrudes into the cylinder 2. Major part of the water injector 3 is located outside the cylinder 2, for instance inside the cylinder head of the respective cylinder 2. The water injector 3 comprises a body 14, which can be attached to the cylinder head. The second end 3b of the water injector 3 is provided with a nozzle portion 8. The nozzle portion 8 comprises one or more nozzle holes 9, through which the water is injected into the cylinder 2. The water injector 3 further comprises an injector needle 10, which is used for controlling the water injection timing and the amount of the water that is injected into the cylinder 2. In figure 2 the injector needle 10 is shown in a closed position. Each water injector 3 is provided with an actuator 18, which is used for lifting the injector needle 10 from the closed position to an open position. The actuator 18 can be for example a pneumatic, electric or hydraulic actuator. In the embodiment of figure 2, the actuator 18 is a pneumatic actuator. The actuator 18 comprises a spring 19, which biases the injector needle 10 towards the closed position. The actuator 18 further comprises a control piston 20, which is arranged in a fluid chamber 21. When pressurized air is introduced into the fluid chamber 21, the control piston 20 is moved away from the water injector 3 against the force of the spring 19. A pushrod 22 transmits the movement of the control piston 21 to the injector needle 10. The injector needle 10 is thus moved towards the open position. Each water injector 3 of the water injection system can be individually controlled. The water injection system comprises a control unit (not shown), which is configured to control the water injection into the cylinders 2 of the engine 1.

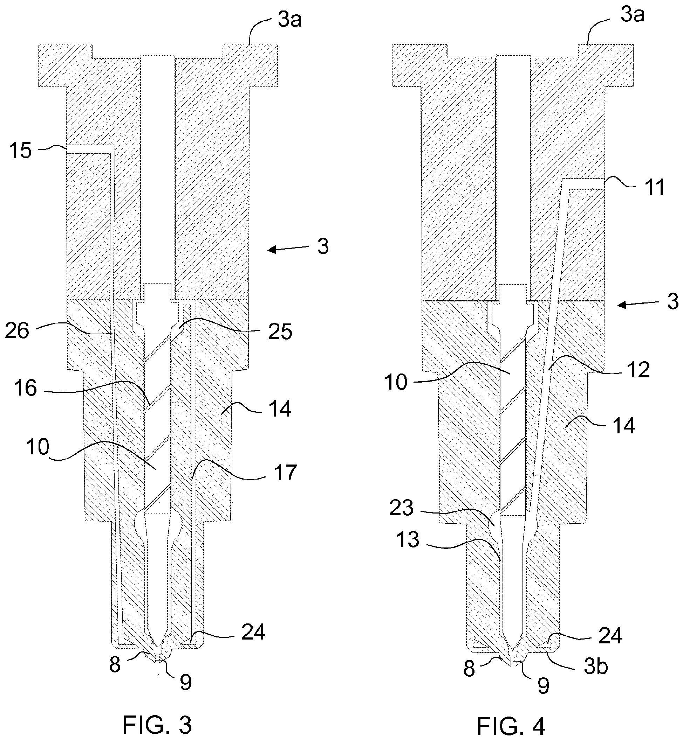

Each water injector 3 is provided with a water inlet 11, which can be seen in figure 4. Through the water inlet 11, the water is introduced into the water injector 3. A water channel 12, 13 inside the water injector 3 connects the water inlet 11 to the nozzle portion 8. The water channel comprises a first portion 12, which connects the water inlet 11 to a high-pressure gallery 23. The high-pressure gallery 23 surrounds the injector needle 10 and is used for storing the water to be injected. A second portion 13 of the water channel connects the high-pressure gallery 23 to the nozzle portion 8 of the water injector 3. The second portion 13 of the water channel is arranged around the injector needle 10.

In order to control the temperature of the water injector 3, the water injector 3 is provided with a cooling water space 24. In the embodiment of the figures, the cooling water space 24 is an annular chamber that is arranged in the proximity of the nozzle portion 8. The cooling water space 24 can receive a cooling water flow, which can either reduce or increase the surface temperature of the water injector 3, depending on the initial temperature of the water injector 3 and the temperature of the cooling water. The cooling water flow can thus be used for preventing both hot and cold corrosion of the water injector 3. If the surface temperature of the water injector 3 inside the combustion chamber is too low, sulfuric acid may condensate on the external surfaces of the water injector 3 causing cold corrosion. On the other hand, if the surface temperature is high, the water injector 3 is subjected to hot corrosion. The water that is injected into the cylinders 2 of the engine 1 flows through the water injector 3 via the water channel 12, 13 and the nozzle opening 9 and reduces the temperature of the water injector 3. In conventional water injectors, the cooling effect of the injected water may reduce the temperature of the water injector too much and make the water injector to suffer from cold corrosion. When the water injection is not used, the temperature of the water injector may become too high. By providing the water injector 3 with a cooling water space 24 and introducing water into the cooling water space 24 at a suitable temperature, the surface temperature of the water injector 3 can be kept at a desired level.

The cooling water is introduced into the cooling water space 24 from the water channel 12, 13. No additional cooling water conduit outside the water injector 3 is thus needed for supplying the cooling water into the cooling water space 24. The water injector 3 is provided with a cooling water outlet 15, through which the cooling water can be introduced from the cooling water space 24 into a return duct 6, which is shown in figure 1. Via the return duct 6, the cooling water can be fed into the tank 7. Instead of returning the water from the cooling water space 24 back to the tank 7, the water could be discharged from the water injection system. An outlet duct 26 connects the cooling water space 24 to the cooling water outlet 15.

For introducing the water from the water channel 12, 13 into the cooling water space 24, the water injector 3 is provided with an internal flow path 16, 17 connecting the water channel 12, 13 and the cooling water space 24. The flow path 16, 17 is configured to cause a drop in the pressure of the water as the water flows from the water channel 12, 13 into the cooling water space 24. The pressure drop is preferably at least 70 percent of the pressure of the water in the water channel 12, 13. A suitable pressure for the water in the cooling water space 24 is in the range of 5-15 bar. The pressure drop increases the temperature of the water. Therefore, the surface temperature of the water injector 3 is increased in a situation where the water injection is in use. On the other hand, when the water injection is not in use, the water flow in the cooling water space 24 reduces the surface temperature of the water injector 3 in spite of the increased temperature of the water. The surface temperature of the water injector 3 can thus be kept in a desired range in different operating conditions of the engine 1. Corrosion of the water injector 3 is thus effectively reduced.

The flow path 16, 17 between the water channel 12, 13 and the cooling water space 24 is configured to convey a desired portion of the water flow into the cooling water space 24. For example 30-70 percent of the water that is introduced into the water injector 3 via the water inlet 11 can be arranged to flow into the cooling water space 24 when the water injection is in use. When the water injection is not in use, naturally all the water that is introduced into the water injector 3 flows into the cooling water space 24.

In the embodiment of the figures, the flow path 16, 17 between the water channel 12, 13 and the cooling water space 24 comprises a groove 16 that is arranged in the injector needle 10. The groove 16 is on the outer surface of the injector needle 10. Via the groove 16, the water flows into a needle damping gallery 25. The water in the needle damping gallery 25 works as a damping medium that damps the opening and closing movements of the injector needle 10. A cooling water duct 17 connects the needle damping gallery 25 to the cooling water space 24.

The dimensioning of the groove 16 is configured such that a suitable pressure drop and a suitable flow rate into the cooling water space 24 is achieved. At least one dimension of the groove 16 in the plane that is perpendicular to the flow direction of the water in the groove 16 is thus configured to be sufficiently small for achieving sufficient pressure drop. The groove 16 can be larger in other directions. The width of the groove 16 can be, for instance, less than 100 µm. Alternatively, or in addition to it, the depth of the groove 16 could be less than 100 µm.

The groove 16 in the injector needle 10 is helical. With a helical groove, the pressure of the water is applied uniformly on the injector needle 10. The pressure thus concentrates the injector needle 10, which ensures that the injector needle 10 moves smoothly during the opening and closing of the water injector 3. By adjusting the pitch, the length of the groove 16 is changed and the groove 16 can be configured to produce a desired pressure drop and cooling water flow. The pitch of the groove 16 does not need to be constant but it can be varying. Water film that is formed between the injector needle 10 and the body 14 of the water injector 3 also improves the tribological properties of the water injector 3. Many different groove profiles are possible. The cross-sectional profile of the groove 16 could be, for instance, semicircular, rectangular, bell-shaped or V-shaped. Instead of only one groove 16, the injector needle 10 could comprise two or more grooves 16. The groove 16 could also be arranged in the body 14 of the water injector 3.

Not according to the invention, instead of the groove 16, the pressure drop between the water channel 12, 13 and the cooling water space 24 could be achieved in some other way. For instance, the flow path between the water channel 12, 13 and the cooling water space 24 could be provided for example with openings having a cross-sectional flow area that is dimensioned to cause a predetermined pressure drop as the water flows from the water channel 12, 13 into the cooling water space 24. The flow path could also comprise a section with a porous material, through which the water is arranged to flow from the water channel 12, 13 into the cooling water space 24. However, compared to openings that are configured to cause a pressure drop, a microgroove in the injector needle 10 or in the body 14 of the water injector 3 has a benefit that cavitation problems can be avoided.

It will be appreciated by a person skilled in the art that the invention is not limited to the embodiments described above, but may vary within the scope of the appended claims. For instance, a fuel injector could be integrated to the water injector.

## Claims

1. A water injector (3) for injecting water into a cylinder (2) of a piston engine (1), the water injector (3) comprising at least one nozzle hole (9) through which water can be injected into the cylinder (2), a water inlet (11) for receiving the water to be injected, a water channel (12, 13) connecting the water inlet (11) to the nozzle hole (9), and an injector needle (10) for opening and closing fluid communication between the water inlet (11) and the nozzle hole (9), **characterized in that** the water injector (3) further comprises a cooling water space (24) for receiving a cooling water flow, and a flow path (16, 17) is arranged between the water channel (12, 13) and the cooling water space (24) for allowing water flow from the water channel (12, 13) into the cooling water space (24), wherein the flow path (16, 17) comprises a groove (16), through which the water is arranged to flow from the water channel (12, 13) into the cooling water space (24) and which is configured to reduce the pressure of the water.

2. A water injector (3) according to claim 1, wherein the flow path (16, 17) is configured to convey at least 30 percent of the water that is introduced into the water channel (12, 13) into the cooling water space (24).

3. A water injector (3) according to claim 1 or 2, wherein the flow path (16, 17) is configured to cause a pressure drop that is at least 70 percent of the pressure in the water channel (12, 13) as the water flows from the water channel (12, 13) into the cooling water space (24).

4. A water injector (3) according to any of claims 1 to 3, wherein the flow path (16, 17) between the water channel (12, 13) and the cooling water space (24) comprises a portion (16) with a limited cross-sectional flow area that is configured to cause a drop in the pressure of the water that flows from the water channel (12, 13) into the cooling water space (24).

5. A water injector (3) according to any of the preceding claims, wherein the groove (16) is arranged in the injector needle (10).

6. A water injector (3) according to any of the preceding claims, wherein the groove (16) is helical.

7. A water injector (3) according to any of the preceding claims, wherein the width of the groove (16) is at most 100 µm.

8. An internal combustion engine (1) comprising at least one cylinder (2), **characterized in that** each cylinder (2) of the engine (1) is provided with a water injector (3) according to any of the preceding claims.

## Patentansprüche

1. Wassereinspritzer (3) zum Einspritzen von Wasser in einen Zylinder (2) eines Kolbenmotors (1), wobei der Wassereinspritzer (3) zumindest ein Düsenloch (9), durch welches Wasser in den Zylinder (2) eingespritzt werden kann, einen Wassereinlass (11) zum Aufnehmen des Wassers, das eingespritzt werden soll, einen Wasserkanal (12, 13), der den Wassereinlass (11) mit dem Düsenloch (9) verbindet, und eine Einspritzernadel (10) zum Öffnen und Schließen von Fluidverbindung zwischen dem Wassereinlass (11) und dem Düsenloch (9) umfasst, **dadurch gekennzeichnet, dass** der Wassereinspritzer (3) ferner einen Kühlwasserraum (24) zum Aufnehmen einer Kühlwasserströmung umfasst und ein Strömungsweg (16, 17) zwischen dem Wasserkanal (12, 13) und dem Kühlwasserraum (24) angeordnet ist, um zu ermöglichen, dass Wasser vom Wasserkanal (12, 13) in den Kühlwasserraum (24) strömt, wobei der Strömungsweg (16, 17) eine Rille (16) umfasst, durch welche das Wasser zum Strömen vom Wasserkanal (12, 13) in den Kühlwasserraum (24) angeordnet ist und welche zum Verringern des Drucks des Wassers konfiguriert ist.

2. Wassereinspritzer (3) nach Anspruch 1, wobei der Strömungsweg (16, 17) zum Befördern von zumindest 30 Prozent des Wassers, das in den Wasserkanal (12, 13) eingeleitet wird, in den Kühlwasserraum (24) konfiguriert ist.

3. Wassereinspritzer (3) nach Anspruch 1 oder 2, wobei der Strömungsweg (16, 17) zum Verursachen eines Druckabfalls, der zumindest 70 Prozent des Drucks im Wasserkanal (12, 13) beträgt, konfiguriert ist, wenn das Wasser vom Wasserkanal (12, 13) in den Kühlwasserraum (24) strömt.

4. Wassereinspritzer (3) nach einem der Ansprüche 1 bis 3, wobei der Strömungsweg (16, 17) zwischen dem Wasserkanal (12, 13) und dem Kühlwasserraum (24) einen Abschnitt (16) mit einem begrenzten Durchflussquerschnitt umfasst, welcher zum Verursachen eines Druckabfalls im Druck des Wassers konfiguriert ist, das vom Wasserkanal (12, 13) in den Kühlwasserraum (24) strömt.

5. Wassereinspritzer (3) nach einem der vorhergehenden Ansprüche, wobei die Rille (16) in der Einspritzernadel (10) angeordnet ist.

6. Wassereinspritzer (3) nach einem der vorhergehenden Ansprüche, wobei die Rille (16) spiralförmig ist.

7. Wassereinspritzer (3) nach einem der vorhergehenden Ansprüche, wobei die Breite der Rille (16) höchstens 100 µm beträgt.

8. Verbrennungsmotor (1), umfassend zumindest einen Zylinder (2), **dadurch gekennzeichnet, dass** jeder Zylinder (2) des Motors (1) mit einem Wassereinspritzer (3) nach einem der vorhergehenden Ansprüche versehen ist.

## Revendications

1. Injecteur d'eau (3) destiné à injecter de l'eau dans un cylindre (2) d'un moteur à piston (1), l'injecteur d'eau (3) comprenant au moins un orifice de buse (9) à travers de l'eau peut être injectée dans le cylindre (2), une entrée d'eau (11) destinée à recevoir l'eau à injecter, un canal d'eau (12, 13) reliant l'entrée d'eau (11) à l'orifice de buse (9), et une aiguille d'injecteur (10) destinée à ouvrir et fermer la communication fluidique entre l'entrée d'eau (11) et l'orifice de buse (9), **caractérisé en ce que** l'injecteur d'eau (3) comprend en outre un espace d'eau de refroidissement (24) destiné à recevoir un flux d'eau de refroidissement, et un trajet d'écoulement (16, 17) est agencé entre le canal d'eau (12, 13) et l'espace d'eau de refroidissement (24) pour permettre à l'eau de s'écouler à partir du canal d'eau (12, 13) vers l'espace d'eau de refroidissement (24), dans lequel le trajet d'écoulement (16, 17) comprend une rainure (16), à travers laquelle l'eau est censée s'écouler à partir du canal d'eau (12, 13) vers l'espace d'eau de refroidissement (24) et laquelle est configurée pour réduire la pression de l'eau.

2. Injecteur d'eau (3) selon la revendication 1, dans lequel le trajet d'écoulement (16, 17) est configuré pour transporter au moins 30 pourcent de l'eau introduite dans le canal d'eau (12, 13) vers l'espace d'eau de refroidissement (24).

3. Injecteur d'eau (3) selon la revendication 1 ou 2, dans lequel le trajet d'écoulement (16, 17) est configuré pour entraîner une baisse de pression d'au moins 70 pourcent de la pression dans le canal d'eau (12, 13) tandis que l'eau s'écoule à partir du canal d'eau (12, 13) vers l'espace d'eau de refroidissement (24).

4. Injecteur d'eau (3) selon l'une quelconque des revendications 1 à 3, dans lequel le trajet d'écoulement (16, 17) entre le canal d'eau (12, 13) et l'espace d'eau de refroidissement (24) comprend une partie (16) avec une section transversale d'écoulement limitée, laquelle est configurée pour entraîner une baisse dans la pression de l'eau s'écoulant à partir du canal d'eau (12, 13) vers l'espace d'eau de refroidissement (24).

5. Injecteur d'eau (3) selon l'une quelconque des revendications précédentes, dans lequel la rainure (16) est agencée dans l'aiguille d'injecteur (10).

6. Injecteur d'eau (3) selon l'une quelconque des revendications précédentes, dans lequel la rainure (16) est hélicoïdale.

7. Injecteur d'eau (3) selon l'une quelconque des revendications précédentes, dans lequel la largeur de la rainure (16) est au maximum de 100 µm.

8. Moteur à combustion interne (1) comprenant au moins un cylindre (2), **caractérisé en ce que** chaque cylindre (2) du moteur (1) est doté d'un injecteur d'eau (3) selon l'une quelconque des revendications précédentes.
